# FASCICULE DE BREVET EUROPEEN

(11) **EP 0 587 650 B1**
(45) Date de publication et mention de la délivrance du brevet: **27.12.1995**
(21) Numéro de dépôt: 92911265.4
(22) Date de dépôt: 26.05.1992
(51) Int. Cl.: B29D 30/56

(54) **DISPOSITIF DE MESURE DU DEFILEMENT D'UNE BANDE DE ROULEMENT LORS DE SON APPLICATION SUR UNE CARCASSE DE PNEUMATIQUE ET SON PROCEDE DE MISE EN UVRE**
VORRICHTUNG UND VERFAHREN ZUM ABLÄNGEN EINES LAUFSTREIFES WÄHREND SEINES AUFLEGENS AUF EINE REIFERKARKASSE
DEVICE AND METHOD FOR MEASURING THE FEED OF A TREAD DURING ITS APPLICATION TO A TIRE CARCASS

(30) Priorité: 05.06.1991 FR 9106843
(43) Date de publication de la demande: 23.03.1994
(73) Titulaire: PNEU LAURENT, 89200 Avallon (FR)
(72) Inventeur: CHABIN, Véronique, F-89440 Angely (FR); BACCAUD, Armand, F-21460 Epoisses (FR)
(74) Mandataire: Bauvir, Jacques
(86) Numéro de dépôt international: FR9200470
(87) Numéro de publication internationale: WO9221513

(56) Documents cités:
- DE-A- 2 105 765
- DE-A- 4 108 515

## Description

La présente invention a pour cadre le rechapage de pneumatiques pour véhicules poids lourds à l'aide de bandes de roulement prémoulées et prévulcanisées. Plus particulièrement elle concerne un dispositif de mesure du défilement de la bande de roulement lors de son application sur une carcasse.

Le procédé de rechapage d'une carcasse de pneumatique poids lourd par l'application d'une bande de roulement prémoulée et prévulcanisée est bien connu. Après avoir ôté ce qu'il reste de la bande de roulement usagée par une opération d'usinage de la carcasse et mis en place une couche de liaison a lieu l'opération d'application d'une nouvelle bande de roulement prémoulée et prévulcanisée suivie d'une vulcanisation en autoclave ou à froid de cette couche de liaison destinée à assurer l'adhérence entre la nouvelle bande de roulement et la carcasse. Parfois, il est nécessaire de remplacer aussi une ou plusieurs nappes de renforcement du sommet.

Pour obtenir un bon assemblage de la nouvelle bande de roulement sur la carcasse, la bande de roulement doit avoir une longueur légèrement plus courte que celle de la circonférence de la carcasse et donc être allongée lors de son application.

Une autre difficulté est liée à l'emploi de bandes de roulement prémoulées comportant un pas de sculptures. Il est souhaitable que ce pas soit respecte au point de raccordement des deux extrémités de la bande de roulement sur la carcasse pour éviter par exemple des défauts d'uniformité du comportement dynamique du pneumatique rechapé.

Un procédé connu d'application d'une bande de roulement sur une carcasse consiste à asservir l'allongement de la bande de roulement lors de son application sur la carcasse à la différence entre la mesure de l'arc de carcasse où l'application de la bande de roulement est achevée et la mesure de la longueur de bande de roulement consommée. Cet asservissement a pour but de réaliser une application régulière de la bande de roulement sur la carcasse avec un allongement moyen prévu initialement pour aboutir, à la fin de l'application, à un raccordement satisfaisant des deux extrémités de la bande de roulement respectant le pas de sculptures.

Ces deux mesures concernent la même quantité de matière - la partie de bande de roulement appliquée sur la carcasse - mais pas dans le même état de déformation : l'arc de carcasse où l'application de la bande de roulement est achevée concerne un matériau allongé lors de son application, la longueur consommée fait, elle, référence à la longueur initiale de la bande de roulement à l'état repos soit dans un état non déformé. La variation d'allongement de la bande de roulement est réalisée par un rouleau presseur actionné par un vérin. La mesure d'arc de carcasse utilise un codeur optique solidaire de l'axe d'entraînement du mandrin sur lequel est montée la carcasse. La mesure de la longueur de bande de roulement consommée correspond à la mesure du défilement de la bande de roulement faite par un second codeur optique solidaire d'un rouleau entraîné en rotation par le déplacement de ladite bande de roulement et situé à proximité du rouleau presseur précédent. L'expérience montre que ce dispositif de mesure du défilement de la bande de roulement lors de l'application de la bande de roulement sur la carcasse n'est pas satisfaisant : il n'est ni fidèle ni reproductible.

Le brevet DE 2 105 765 a proposé, pour améliorer la fiabilité de cette mesure de défilement de la bande de roulement lors de son application sur une carcasse, de suivre le déplacement de l'extrémité libre de la bande de roulement lors de son passage devant une série de cellules photo-électriques disposées régulièrement le long d'un convoyeur d'alimentation a rouleaux. Mais cette mesure est nécessairement discontinue et le dispositif est coûteux.

L'invention a pour objet un dispositif simple d'application d'une bande de roulement prémoulée et prévulcanisée sur une carcasse de pneumatique et son procédé de mise en oeuvre.

Le dispositif d'application d'une bande de roulement prémoulée et prévulcanisée, prédécoupée a la longueur voulue, sur une carcasse de pneumatique montée sur un mandrin, comportant des moyens de mesure de l'arc de carcasse où est appliquée la bande de roulement, des moyens de mesure de la longueur consommée de la bande de roulement, et des moyens d'asservissement de l'allongement de la bande de roulement à la différence entre ladite mesure de l'arc de carcasse où est appliquée la bande de roulement et ladite mesure de longueur consommée de ladite bande de roulement, est caractérisé en ce que lesdits moyens de mesure de la longueur consommée de la bande de roulement mesurent le déplacement d'une butée appliquée avec une légère pression contre l'extrémité libre de la bande de roulement.

Un autre aspect de cette réalisation est caractérisé en ce que la pression d'application de la butée est fournie par l'action d'un moteur susceptible d'appliquer un couple sensiblement constant quelle que soit sa vitesse de rotation même nulle.

Un troisième aspect de cette réalisation est caractérisé en ce que la butée est reliée à une courroie crantée sans fin maintenue par des poulies dont l'une a son axe solidaire de l'axe du moteur à couple sensiblement constant.

Un quatrième aspect de cette réalisation est caractérisé en ce que les déplacements de ladite butée sont mesurés par un codeur optique solidaire de l'axe d'une des poulies de maintien de la courroie crantée.

C'est un avantage de l'invention de réaliser la mesure de défilement de la bande dans une zone quasiment libre d'efforts de celle-ci et ainsi non déformée, la mesure est donc directement comparable à la mesure initiale de longueur de la bande de roulement.

Un autre avantage est lié au fait que la butée est rendue solidaire de l'extrémité libre de la bande de roulement, cela élimine toute possibilité de glissements respectifs comme dans le cas d'un rouleau entraîné en rotation par le déplacement de la bande de roulement.

La pression d'application de la butée contre l'extrémité libre de la bande de roulement s'oppose aux frottements des différents rouleaux ce qui fiabilise le résultat de la mesure.

Enfin, ce dispositif très simple et peu coûteux fournit une mesure continue de la longueur consommée de la bande de roulement ce qui permet un asservissement fin de l'allongement de la bande de roulement lors de son application.

Le procédé, objet de l'invention, est un procédé de rechapage d'une carcasse de pneumatique au moyen d'une bande de roulement prémoulée et prévulcanisée, prédécoupée à la longueur voulue en respectant le pas des sculptures, puis enroulée sur la carcasse en asservissant son allongement à la différence entre la mesure de l'arc de carcasse où est appliquée la bande de roulement et la mesure de la longueur consommée de ladite bande de roulement caractérisé en ce que la longueur consommée de la bande de roulement est mesurée en suivant le déplacement d'une butée appliquée avec une légère pression contre l'extrémité libre de la bande de roulement.

Un mode de réalisation particulier de l'invention est maintenant décrit à l'aide des dessins annexés suivants :
- la figure 1 est une vue du dispositif de mesure de défilement de la bande de roulement ;
- la figure 2 est un schéma d'ensemble du dispositif d'application d'une bande de roulement sur une carcasse de pneumatique.

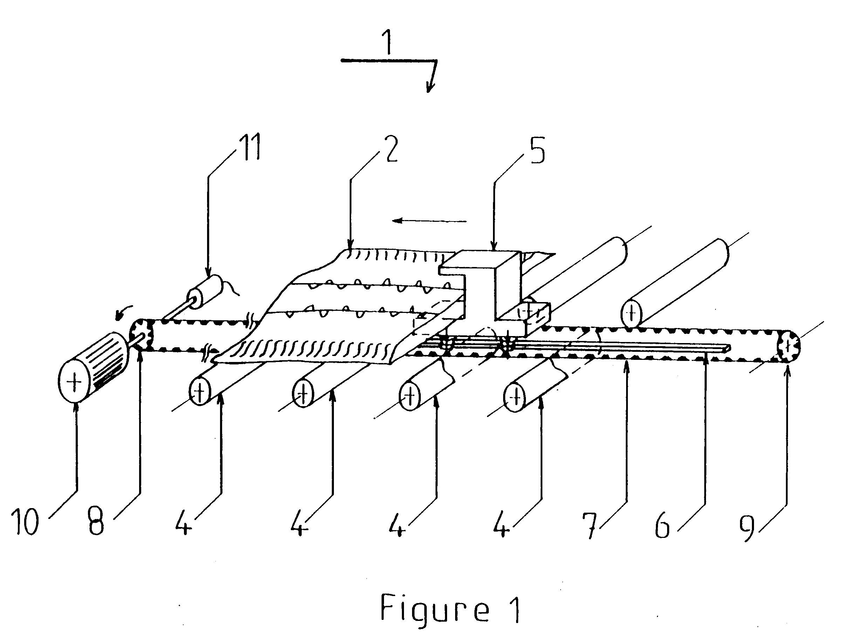

Le dispositif 1 de mesure du défilement de la bande de roulement 2 lors de son application sur une carcasse 21 est intégré à une table de préparation 3 à rouleaux 4. La bande de roulement 2, posée à plat sur cette table de préparation 3 peut être déplacée aisément grâce à ces rouleaux 4 (figure 1).

Le dispositif 1 de mesure comprend une butée 5 se déplacant librement sur un rail de guidage 6, reliée à une courroie 7 crantée et sans fin maintenue par une poulie entraînée 8 et une poulie folle 9, un moteur 10 et un codeur optique 11. Le moteur 10 est susceptible de fournir un couple sensiblement constant quelle que soit sa vitesse de rotation même nulle. Le moteur 10 et le codeur optique 11 ont tous les deux leur axe solidaire de celui de la poulie entraînée 8.

La butée 5 exerce pendant toute la phase d'application de la bande de roulement sur la carcasse une force sur l'extrémité libre de la bande de roulement de l'ordre de vingt newtons, grâce à l'action du moteur 10 transmise par la poulie entraînée 8 et la courroie 7. Cette force est suffisante pour que l'application de la butée 5 sur l'extrémité libre de la bande de roulement 2 soit continue pendant toute l'opération d'application de la bande de roulement 2 sur la carcasse 21 sans qu'elle n'entraîne de déformation mesurable de ladite bande de roulement 2.

La rotation de la poulie entraînée 8, enregistrée par le codeur optique 11 est ainsi directement proportionnelle au déplacement de l'extrémité libre de la bande de roulement 2 soit à la longueur de bande consommée à tout instant de l'opération d'application de la bande de roulement 2 sur la carcasse 21.

Les mesures transmises par ce dispositif 1, couplées à celles donnant l'arc de carcasse 21 où l'application de la bande de roulement 2 est achevée permettent d'obtenir une maîtrise satisfaisante des conditions d'application d'une bande de roulement 2 sur une carcasse 21 de pneumatique.

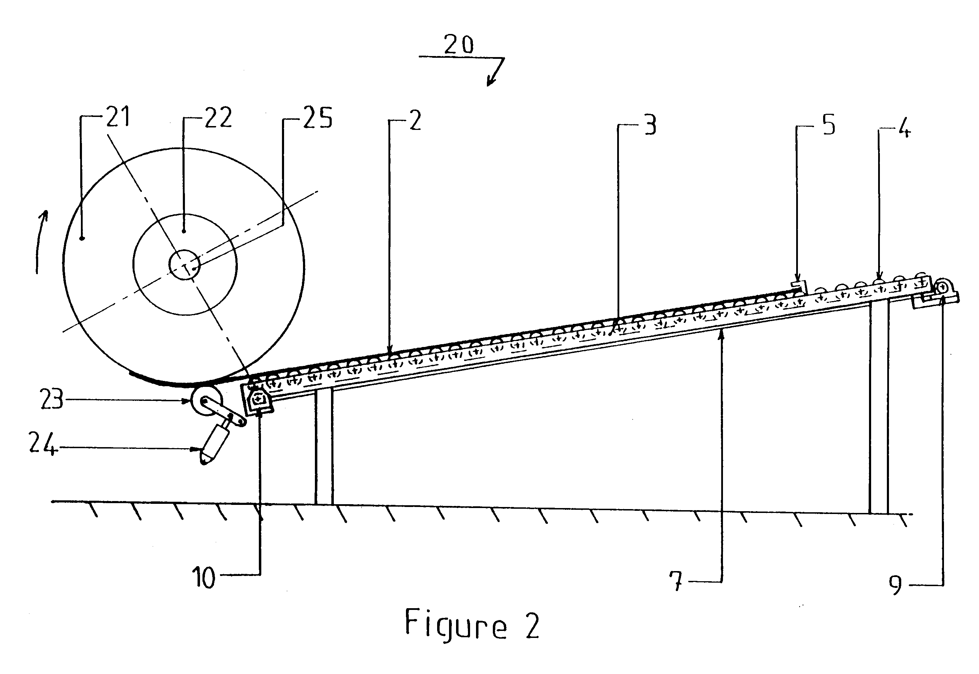

Le procédé de rechapage d'une carcasse 21 de pneumatique avec une bande de roulement 2 prémoulée et prévulcanisée utilise le dispositif 20 représenté à la figure 2. Ce procédé suit les étapes suivantes : après avoir ôté ce qu'il reste de la bande de roulement usagée par une opération d'usinage de la carcasse 21, une couche de liaison destinée à assurer l'adhérence entre la carcasse 21 et la nouvelle bande de roulement 2 est mise en place ; puis la carcasse 21 est montée sur le mandrin 22 et gonflée ; la bande de roulement 2 est alors coupée à une longueur proche de celle de la circonférence de la carcasse 21 en respectant le pas de sculptures et installée sur une table de préparation 3 avec ses sculptures contre les rouleaux 4 de guidage et préparée par l'application d'une couche de dissolution compatible avec la couche de liaison ; l'extrémité de la bande de roulement 2 située à proximité de la carcasse 21 est ensuite engagée sous le rouleau presseur 23 et appliquée sur la carcasse 21 tangentiellement à celle-ci, la butée 5 est installée contre l'autre extrémité ; le mandrin 22 est mis en rotation, ce qui entraîne l'enroulement de la bande de roulement 2 autour de la carcasse 21 ; pendant cette application, la pression d'application du vérin 24 actionnant le rouleau presseur 23 est asservie à la différence entre la mesure de l'arc de carcasse 21 où l'application de la bande de roulement 2 est achevée fournie par le codeur optique 25 et la mesure de la longueur de bande de roulement 2 consommée donnée par le dispositif 1 ; à la fin de l'application de la bande de roulement 2, l'opérateur achève le raccordement entre les deux extrémités en appliquant une gomme de liaison ; la couche de liaison et la gomme de liaison sont ensuite vulcanisés à froid ou en autoclave.

Le dispositif et le procédé, objets de l'invention, peuvent s'appliquer au rechapage de tous les types de pneumatiques avec une bande de roulement prémoulée et prévulcanisée, en respectant le pas de sculptures, si nécessaire.

## Revendications

1. Dispositif d'application d'une bande de roulement (2) prémoulée et prévulcanisée, prédécoupée à la longueur voulue, sur une carcasse (21) de pneumatique montée sur un mandrin (22), comportant des moyens de mesure de l'arc de carcasse (21) où est appliquée la bande de roulement (2), des moyens de mesure de la longueur consommée de la bande de roulement (2), et des moyens d'asservissement de l'allongement de la bande de roulement à la différence entre ladite mesure de l'arc de carcasse (21) où est appliquée la bande de roulement (2) et ladite mesure de longueur consommée de ladite bande de roulement (2), caractérisé en ce que lesdits moyens de mesure de la longueur consommée de la bande de roulement mesurent le déplacement d'une butée (5) appliquée avec une légère pression contre l'extrémité libre de la bande de roulement (2).

2. Dispositif d'application d'une bande de roulement (2) prémoulée et prévulcanisée, prédécoupée à la longueur voulue, sur une carcasse (21) de pneumatique montée sur un mandrin (22) selon la revendication 1, caractérisé en ce que la pression d'application de la butée (5) est fournie par l'action d'un moteur (10) susceptible d'appliquer un couple sensiblement constant quelle que soit sa vitesse de rotation même nulle.

3. Dispositif d'application d'une bande de roulement (2) prémoulée et prévulcanisée, prédécoupée à la longueur voulue, sur une carcasse (21) de pneumatique montée sur un mandrin (22) selon les revendications 1 et 2, caractérisé en ce que la butée (5) est reliée à une courroie (7) crantée sans fin maintenue par des poulies (8, 9) dont l'une a son axe solidaire de l'axe du moteur (10) à couple sensiblement constant.

4. Dispositif d'application d'une bande de roulement (2) prémoulée et prévulcanisée, prédécoupée à la longueur voulue, sur une carcasse (21) de pneumatique montée sur un mandrin (22) selon les revendications 1 à 3, caractérisé en ce que les déplacements de la butée (5) sont mesurés par un codeur optique (11) solidaire de l'axe d'une des poulies (8, 9) de maintien de la courroie (7) crantée sans fin.

5. Procédé de rechapage au moyen d'une bande de roulement (2) prémoulée et prévulcanisée, prédécoupée à la longueur voulue en respectant le pas des sculptures, puis enroulée sur la carcasse (21) en asservissant son allongement à la différence entre la mesure de l'arc de carcasse (21) où est appliquée la bande de roulement (2) et la mesure de la longueur consommée de ladite bande de roulement (2), caractérisé en ce que la longueur consommée de la bande de roulement (2) est mesurée en suivant le déplacement d'une butée (5) appliquée avec une légère pression contre l'extrémité libre de la bande de roulement (2).

## Claims

1. Device for installation of a pre-moulded. pre-vulcanised tread (2), pre-cut to the desired length, on a tyre casing (21) mounted on a chuck (22), comprising means for measuring the arc of the casing (21) where the tread (2) is installed, means for measuring the length of tread (2) used and means for controlling the elongation of the tread to the difference between said measurement of the arc of the casing (21) where the tread (2) is installed and said measurement of the length of said tread (2) used, characterised in that said means for measurement of the length of the tread used the displacement of a stop (5) pressed lightly against the free end of the tread (2).

2. Device for installation of a pre-moulded, pre-vulcanised tread (2), pre-cut to the desired length, on a tyre casing (21) mounted on a chuck (22) according to claim 1, characterised in that the application of the stop (5) is supplied by the action of a motor capable of generating a substantially constant torque, whatever its speed of rotation, even if zero.

3. Device for installation of a pre-moulded, pre-vulcanised tread (2), pre-cut to the desired length, on a tyre casing (21) mounted on a chuck (22) according to claims 1 and 2, characterised in that the stop (5) is connected to an endless notched belt (7) held in place by pulleys (8, 9), the shaft of one of which is attached to the shaft of the motor (10) of substantially constant torque.

4. Device for installation of a pre-moulded, pre-vulcanised tread (2), pre-cut to the desired length, on a tyre casing (21) mounted on a chuck (22) according to claims 1 to 3, characterised in that the displacements of the stop (5) are measured by an optical coder (11) attached to the shaft of one of the pulleys (8, 9) holding the endless notched belt (7).

5. Recapping process by means of a pre-moulded, pre-vulcanised tread (2), pre-cut to the desired length while adhering to the tread pattern spacing, then wound on the casing (21) while controlling its elongation to the difference between the measurement of the arc of the casing (21) where the tread (2) is installed and the measurement of the length of said tread (2) used, characterised in that the length of tread (2) used is measured by monitoring the displacement of a stop (5) pressed lightly against the free end of the tread (2).

## Patentansprüche

1. Vorrichtung zum Aufbringen eines vorgeformten und vorvulkanisierten Laufflächenbandes (2), das auf die gewünschte Länge zugeschnitten ist, auf eine Karkasse (21) eines Luftreifens, die auf einem Dorn (22) aufgebracht ist, mit Meßeinrichtungen des Bogens der Karkasse (21) wo das Laufflächenband (2) aufgebracht wird, Meßeinrichtungen der verbrauchten Länge des Laufflächenbandes (2) und Einrichtungen zum Regeln des Streckens des Laufflächenbandes um den Unterschied zwischen der Messung des Bogens der Karkasse (21), wo das Laufflächenband (2) aufgebracht wird, und der Messung der verbrauchten Länge des Laufflächenbandes (2), dadurch gekennzeichnet, daß die Meßeinrichtungen der verbrauchten Länge des Laufflächenbandes die Bewegung eines Anschlags (5) messen, der mit einem leichten Druck gegen das freie Ende des Laufflächenbandes (2) gedrückt wird.

2. Vorrichtung zum Aufbringen eines vorgeformten und vorvulkanisierten Laufflächenbandes (2), das auf die gewünschte Länge zugeschnitten ist, auf eine Karkasse (21) eines Luftreifens, der auf einen Dorn (22) montiert ist, nach Anspruch 1, dadurch gekennzeichnet, daß der Aufbringdruck des Anschlags (5) durch den Betrieb eines Motors (10) geliefert wird, der in der Lage ist, ein im wesentlichen konstantes Moment unabhängig von seiner Drehgeschwindigkeit, sogar wenn diese Null ist, aufzubringen.

3. Vorrichtung zum Aufbringen eines vorgeformten und vorvulkanisierten Laufflächenbandes (2), das auf die gewünschte Länge zugeschnitten ist, auf eine Karkasse (21) eines Luftreifens, der auf einen Dorn (22), nach Anspruch 1 oder 2, dadurch gekennzeichnet, daß der Anschlag (5) mit einem endlosen Zahnriemen (7) verbunden ist, der von Rollen oder Scheiben (8, 9) gehalten wird, von denen eine ihre Achse mit dem Motor (10) mit im wesentlichen konstantem Drehmoment verbunden hat.

4. Vorrichtung zum Aufbringen eines vorgeformten und vorvulkanisierten Laufflächenbandes (2), das auf die gewünschte Länge zugeschnitten ist, aus eine Karkasse (21) eines Luftreifens, der auf einen Dorn (22) aufgebracht ist, nach Anspruch 1 bis 3, dadurch gekennzeichnet, daß die Bewegungen des Anschlags (4) durch einen optischen Codierer (11) gemessen werden, der mit der Achse einer der Scheiben (8, 9) zum Halten des endlosen Zahnriemens (7) verbunden ist.

5. Verfahren zum Reifenrunderneuern mit Hilfe eines vorgeformten und vorvulkanisierten Laufflächenbandes (2), das auf die gewünschte Länge zugeschnitten ist, unter Berücksichtigung der Profilsteigung bzw. des Profilrasters, sodann aufgerollt auf die Karkasse (21) unter Regeln von dessen Streckung auf den Unterschied zwischen der Messung des Bogens der Karkasse (21), wo das Laufflächenband (2) aufgebracht wird, und der Messung der verbrauchten Länge des Laufflächenbandes (2), dadurch gekennzeichnet, daß die verbrauchte Länge des Laufflächenbandes (2) unter Folgen der Bewegung eines Anschlags (5) gemessen wird, der mit einem leichten Druck gegen das freie Ende des Laufflächenbandes (2) gedrückt wird.
